Europäisches Patentamt

European Patent Office

Office européen des brevets

(11) Publication number: 0 219 249
A1

## (12) EUROPEAN PATENT APPLICATION

(21) Application number: 86307362.3

(22) Date of filing: 25.09.86

(51) Int. Cl.⁴: C 03 C 14/00

(30) Priority: 01.10.85 GB 8524143

(43) Date of publication of application:
22.04.87 Bulletin 87/17

(84) Designated Contracting States:
DE FR GB SE

(71) Applicant: UNITED KINGDOM ATOMIC ENERGY
AUTHORITY
11 Charles II Street
London SW1Y 4QP(GB)

(72) Inventor: Dawson, David Malcolm
20 Bosleys Orchard Grove
Wantage Oxfordshire(GB)

(74) Representative: Mansell, Keith Rodney
Patents Branch United Kingdom Atomic Energy Authority
11 Charles II Street
London SW1Y 4QP(GB)

(54) Fibre reinforced composites.

(57) Fibre reinforced glass- or ceramic-matrix composites are made by hot pressing a "pre-preg" mixture comprising fibre (e.g. continuous SiC fibre) impregnated with a glass (e.g. borosilicate) or ceramic powder, the mixture, for example, being in the form of an aligned fibre "pre-preg" sheet made by a filament winding technique.

The hot pressing procedure is carried out by heating the mixture to a hot pressing temperature without application of pressure thereto and then applying pressure at the hot pressing temperature for a controlled length of time. In this way, the flexural strength and toughness of the composite may be considerably improved.

EP 0 219 249 A1

0219249

## Fibre Reinforced Composites

This invention relates to fibre reinforced glass- or ceramic-matrix composites and their production.

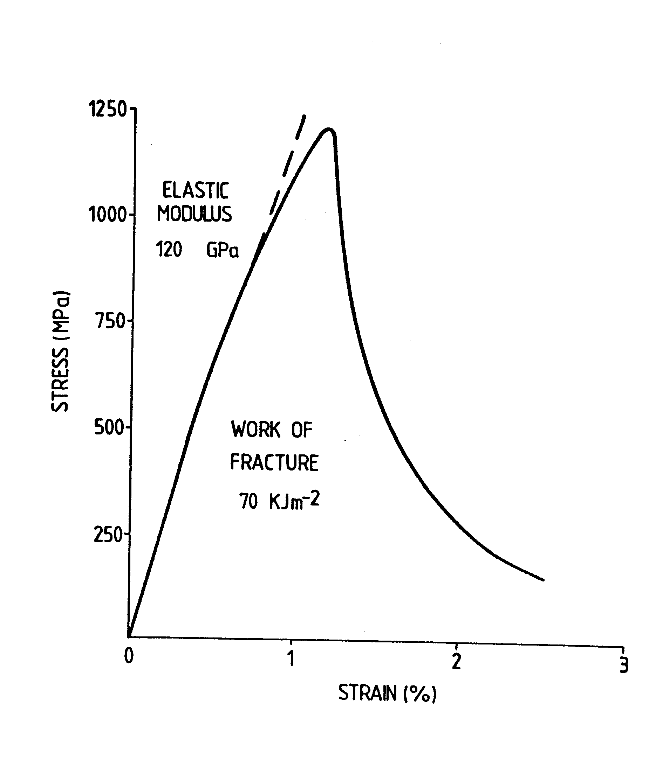

It is known to reinforce glasses and glass-ceramics with fibres to give composites with high strength and toughness having potential application in the production of components for the aerospace industry for example. See, for example J. Mater. Sci., 15, 463 (1980); J. Mater. Sci., 17, 1201 (1982); J. Mater. Sci., 17, 2371 (1982) and UK Patent Application Publication No 2 075 490 A (equivalent to US Patent No 4 314 582). The latter describes silicon carbide fibre reinforced glass composites wherein the glass may be borosilicate glass, high silica content glass or aluminosilicate glass, and shows the flexural strength of a borosilicate glass-silicon carbide fibre reinforced composite utilising silicon carbide yarn with a 0° fibre orientation to be just under 500 MPa at temperatures below 500°C (see Figure 1A).

The above-mentioned patent specification describes making the composites by hot pressing a mixture of silicon carbide fibres and powdered glass at pressures of 6.9 to 13.8 MPa and temperatures of approximately 1050° - 1450°C. The present invention is concerned with a modification of the hot pressing procedure whereby it is found possible to improve the properties of glass- or ceramic-matrix composites. Thus, the invention provides a method of making a fibre reinforced glass- or ceramic-matrix composite comprising the steps of

(i) preparing a mixture comprising the fibre impregnated with the glass or ceramic, and

(ii) hot pressing the mixture; characterised in that, before step (ii) is carried out, the mixture prepared in step (i) is heated, without application of pressure, to a temperature suitable for carrying out hot pressing in step (ii).

Composites made by the method of the invention have been found, in specific cases as evidenced in the examples herein, to exhibit greater strength and toughness than comparable composites made as described in the abovementioned patent specification.

The fibre may be any fibre for providing improved properties in a glass- or ceramic-matrix such as known in the art and may, for example, be silicon carbide or alumina. Silicon carbide fibre is preferred and may, for example, be in the form of a multifilament yarn or monofilament. Where the fibre is continuous, the mixture used may be made by the known filament winding technique described, for example, in UK Patent No 1 279 252. Thus, the mixture may be made by causing a tow of continuous fibres to pass through a slip comprising powdered matrix material in a liquid medium in order to impregnate the fibres, followed by winding the impregnated fibres onto a former. The mixture, commonly referred to as a "pre-preg" in the art, may be cut from the former in sheet form and then subjected to the hot pressing procedure.

In another embodiment of the invention, the fibre may be discontinuous, for example it may be in the form of chopped fibres or whiskers. Such fibre may be made into "pre-preg" form, for example by felting or paper-making methods.

Examples of glass that may be used as matrix material are glass proper such as borosilicate glass or aluminosilicate glass, and glass-ceramics such as cordierite or celsian.

The composites may be produced with a wide range of compositions, for example having a fibre volume fraction of between 0.2 and 0.6.

In another aspect, the invention provides a silicon carbide fibre reinforced borosilicate glass composite having, in the temperature range up to 500°C, a flexural strength of greater than 500 MPa, for example greater than 1000 MPa, and a work of fracture of greater than 10 $kJm^{-2}$, for example greater than 40 $kJm^{-2}$.

The invention will now be particularly described, by way of example only, as follows. Reference will be made to the accompanying drawing, the sole figure of which (Figure 1) shows the relationship between stress and strain for a composite of the invention.

EXAMPLE 1

Preparation of Pre-preg

NICALON (Registered Trade Mark of Nippon Carbon) continuous silicon carbide fibre tow (filament diameter 15 μm; round cross-section; 500 filaments/yarn) was drawn up from a container bin and through a tube furnace held at a temperature of between 500°C and 1000°C, for example 800°C, to give a residence time of ca.10s. This was to remove an organic size from the fibres which is present in their commercially available form. The desized tow was drawn through free rotating PTFE rollers and subjected to an air jet in order to spread the fibres. The tow was then submerged in an air agitated slip comprising PYREX (Registered Trade Mark) borosilicate glass powder (particle

- 4 -

0219249

size 45 μm) suspended in a solution of an organic binder in a liquid carrier. This gave a mixture comprising the tow impregnated with the borosilicate glass.

The mixture was then taken up on an octagonal winding drum (each face 250 x 100 mm) to form a tape. Winding rates were in the range of 1 to 6 tows at 0.2 to 20 m min$^{-1}$, where 4 tows at 1 m min$^{-1}$ was regarded as standard. The resulting prepreg sheet was dried and removed from the drum.

## Hot Pressing

The prepreg sheet was cut to size and placed in the cavity of a graphite die and hot pressed between graphite punches faced with polished molybdenum foil as a release aid by the following schedule:

heating to 930 ± 10°C at 50°C min$^{-1}$;
allowing 2 min to reach thermal equilibrium;
applying a pressure of 10 MPa for 3 to 5 min; and
extracting the resulting composite after allowing the die to cool to ambient temperature.

The above procedure was used to fabricate rectangular slab composites of sizes 46 x 8 x 1 to 3 mm, 50 x 15 x 1 to 10 mm and 100 x 100 x 2 to 10 mm, part (1/3) cylinder composites (radius 50 mm x 100 x 2 to 10 mm), and components such as a compressor blade with root. The composites were subjected to standard mechanical testing.

## Alternative Process Conditions

Pre-pregs were made using a slip comprising glass (500 or 600 g) in methyl ethyl ketone (1.9L) in which polyvinyl acetate binder (156 g) was dissolved. The fibre volume

- 5 -

**0219249**

fractions of the resulting composites were 0.44 and 0.52. Regular additions of methyl ethyl ketone, polyvinyl acetate and glass powder were required to maintain the slip composition and level.

Pre-pregs were also made using a slip comprising glass (200 - 750g) in water (1.5L) in which polyvinyl pyrolidone/ethane diol (60 to 40g - 130 to 70g, principally 100 to 60g) or polyethylene oxide (20 to 100g, principally 40g) was dissolved. The resulting composites had fibre volume fractions within the range 0.25 to 0.63.

## Results

(A)

A borosilicate glass matrix composite prepared as above with a fibre volume fraction of 0.4 was found to have the following properties at ambient temperature:-

| | |
|---|---|
| Mean Flexural Strength | 1 GPa |
| Weibull Modulus | 15 |
| Elastic Modulus | 90 GPa |
| Shear Strength | 60 MPa |
| Work of Fracture (Notched Charpy) | 40-100 $kJm^{-2}$ |
| Compressive Strength | 1 GPa |
| Irreversible Matrix Cracking | >850 MPa |
| 850 MPa Dead Load Lifetime | >6 h |
| 500-850 MPa Cyclic Load Lifetime | 325 cycles |
| Fracture Toughness (Kq) | 26.3 MPa m |
| Tensile Strength (Tensile/Shear Failure) | 450 MPa |
| Density | 2.-3 $Mgm^{-3}$ |

Still further tests were carried out to measure various mechanical properties of the above-mentioned composite as a function of test temperature. The results are summarised i the table below:

| Temperature (°C) | Flexural Strength (MPa) | Weibull Modulus | Work of Fracture (KJm$^{-2}$) | Strain at Maximum Stress (%) |
|---|---|---|---|---|
| 25 | 1040 | 12 | 75 | 1.5 |
| 200 | 1060 | 7 | 65 | 1.4 |
| 400 | 1000 | 10 | 55 | 1.5 |
| 500 | 990 | 12 | 52 | 1.9 |
| 575 | 580 | 5 | 50 | 2.7 |

The results show that the mechanical properties of the composites are retained at temperatures of up to 400°C and probably up to 500°C. Specimens loaded to 500 MPa at 500°C for 1000 hours survived and when subsequently tested to failure at ambient temperature had a modulus of rupture in the same distribution as control specimens indicating that no significant degradation had occurred.

In further testing of the above-mentioned composite the stress/strain curve in flexure shown in Figure 1 was obtained. Referring to the curve, particular features to note are (i) that there is near 100% reinforcement efficiency in that the composite failure strain approaches the fibre failure strain and the failure stress approaches the "rule of mixtures" value for fibres and glass matrix; and (ii) the high work of fracture, attributable to fibre pullout (the area under the curve is proportional to the work of fracture).

(B)

A borosilicate glass matrix composite prepared as above with a fibre volume fraction of 0.5 was found to have the following properties at ambient temperature:-

| Mean Flexural Strength | 1.25 GPa | **0219249** |

Weibull Modules (from results       20
on 100 specimens made in 15
separate pressings)

Elastic Modules                     11 GPa

Work of Fracture                    60-100 kJm$^{-2}$

EXAMPLE 2

The procedure of Example 1 was repeated using a glass-ceramic powder, i.e. cordierite or celsian, instead of the borosilicate glass powder. The only significant preparative difference was the hot pressing schedule which was as follows:

heating to 900 to 1100°C (e.g. 950°C) at 10 to 200°C min$^{-1}$ (e.g. 100°C min$^{-1}$);

allowing 0.5 to 2 min to reach thermal equilibrium;

a pressure of 10 MPa applied for 3 to 5 min;

releasing the pressure and subsequently ceraming at a temperature of 1100°C to 1300°C for 10 to 60 min; and

extracting the resulting composite after allowing the die to cool to ambient temperature.

## Claims

1.    A method of making a fibre reinforced glass- or ceramic-matrix composite comprising the steps of

(i)   preparing a mixture comprising the fibre impregnated with the glass or ceramic, and

(ii) hot pressing the mixture; <u>characterised in that,</u> before step (ii) is carried out, the mixture prepared in step (i) is heated, without application of pressure, to a temperature suitable for carrying out hot pressing in step (ii).

2.    A method according to claim 1 wherein the fibre is in the form of continuous fibres.

3.    A method according to claim 2 wherein the mixture is prepared by contacting a tow of the continuous fibres with a slip comprising powdered matrix material in a liquid medium in order to impregnate the fibres, followed by winding the impregnated fibres onto a former.

4.    A method according to any of the preceding claims wherein the fibre is silicon carbide fibre.

5.    A method according to any of the preceding claims wherein the matrix is a borosilicate glass, an aluminosilicate glass, or a glass-ceramic.

6.    A method according to any of the preceding claims wherein the composite has a fibre volume fraction of between 0.2 and 0.6.

7.    A silicon carbide fibre reinforced borosilicate glass composite having, in the temperature range up to 500°C, a flexural strength of greater than 500 MPa and a work of fracture of greater than 40 kJm$^{-2}$.

8.    A composite according to claim 7 having a flexural strength of greater than 1000 MPa.

## DOCUMENTS CONSIDERED TO BE RELEVANT

EP 86307362.3

| Category | Citation of document with indication, where appropriate, of relevant passages | Relevant to claim | CLASSIFICATION OF THE APPLICATION (Int. Cl.4) |
|---|---|---|---|
| X | DE - A - 2 104 550 (FITZER)<br>* Claims 1,4,8 * | 1,2,4 | C 03 C 14/00 |
| D,A | US - A - 4 314 852 (BRENNAN et al.)<br>* Abstract; column 2, line 53 - column 3, line 33 * | 1-8 | |
| A | US - A - 4 464 192 (LAYDEN et al.)<br>* Abstract; column 3, lines 47-61; column 4, lines 28-40, 51-62; column 5, lines 12-19* | 1-8 | |
| X,P | DE - A1 - 3 516 920 (ROEDER et al.)<br>* Claims 1,2,5; page 7, lines 6-16; page 17, lines 15-20; page 19, lines 6-11 * | 1-6 | |
| | | | TECHNICAL FIELDS SEARCHED (Int Cl 4)<br><br>C 03 C |

The present search report has been drawn up for all claims

| Place of search | Date of completion of the search | Examiner |
|---|---|---|
| VIENNA | 10-12-1986 | HAUSWIRTH |